Europäisches Patentamt

(19) European Patent Office

Office européen des brevets

(11) Publication number: **0 055 631**

A1

(12) # EUROPEAN PATENT APPLICATION

(21) Application number: 81306179.3

(22) Date of filing: 30.12.81

(51) Int. Cl.³: **C 08 G 63/68**
C 08 K 3/20, C 08 K 3/38
C 08 K 5/02, C 08 K 5/03
C 08 K 5/05, C 08 K 5/52
C 08 L 67/06, C 08 F 299/04

(30) Priority: 29.12.80 US 220573

(43) Date of publication of application:
07.07.82 Bulletin 82/27

(84) Designated Contracting States:
BE DE FR GB IT NL

(71) Applicant: HOOKER CHEMICALS & PLASTICS CORP.
P.O.Box 189 345, Third Street
Niagara Falls New York 14302(US)

(72) Inventor: Wagner, George M.
4983 Creek Road Extension
Lewiston New York 14092(US)

(74) Representative: Myerscough, Philip Boyd et al,
J.A.Kemp & Co. 14, South Square Gray's Inn
London, WC1R 5EU(GB)

(54) Flame retardant polymer systems.

(57) The flame-retardancy of a polyester composition derived from a reaction product of an adduct of hexahalocyclopenta-diene with maleic acid or anhydride, a polyhydric alcohol component and a polycarboxylic acid or acid anhydride component containing aliphatic carbon-to-carbon unsaturation, and a styrene-type monomer, is substantially bolstered by the inclusion therein of finely-divided antimony oxide and/or zinc borate, and a brominated organic compound soluble in styrene.

EP 0 055 631 A1

Croydon Printing Company Ltd.

- 1 -

Case 4277/WJC 12/10/80

## FLAME RETARDANT POLYMER SYSTEMS

## BACKGROUND OF THE INVENTION AND PRIOR ART

The present invention relates to flame-retardant resin systems and, more particularly, to flame-retardant polymer compositions which contain as a polymer portion the reaction product of a hexahalocyclopentadiene, a polyhydric alcohol, a polycarboxylic acid containing aliphatic carbon-to-carbon unsaturation, a styrene type monomer, and maleic acid anhydride. The flame retardant properties of such polymers are substantially increased by utilizing a brominated organic compound and minor amounts of finely-divided antimony oxide or zinc borate.

The present polymer systems are useful in the preparation of articles of commerce which may be cast, molded or laminated. The standards for flame retardancy for such articles have increased steadily over the years in increasing increments. Many polymer compositions previously considered to be flame retardant and useful in industry do not meet the standards of today or the improved standards which are almost certain to be set in the future. Thus, flame retardant resin compositions developed at this point in time must not only meet today's standards, but must meet higher standards to be viable in the marketplace. In addition to improved flame retardant standards, other properties, such as strength and transparency, are continuously improving, and a product, to be commercially competitive, must be as good as, or better than, the flame retardant polymer compositions available today. The present flame retardant systems and polymers fulfill these criteria.

One method of increasing the flame retardancy of a polymer system is to add a material with known flame retardant properties to the system. However, many additives adversely affect physical properties, such as transparency or strength, and, in addition, have a detrimental effect in the gel and curing conditions. Thus, improving the flame retardancy using additives has not been eminently successful.

The present invention relates to polyester polymer systems, that is, polymerizable mixtures of components, and also to polymerized compositions of such systems in their finally reacted form as insoluble, infusible compositions.

Polyester systems and compositions containing adducts of hexahalocyclopentadiene are well known in the art and are described in U. S. Patents Nos. 2,779,700 and 2,779,701, the teachings of which are hereby incorporated by reference.

Briefly, the hexahalocyclopentadiene component may be a chloro, bromo or fluoro substituted cyclopentadiene wherein all of the hydrogens are replaced by a halogen. Hexachlorocyclopentadiene is presently the most economic and readily available hexachlorocyclopentadiene and, hence, is preferred in the present invention. The hexahalocyclopentadiene component is utilized in the form of an adduct which is capable of being esterified with a polyhydric alcohol or a polycarboxylic acid. Most preferably, the adduct is the reaction product of hexachlorocyclopentadiene and maleic acid or anhydride to product 1,4,5,6,7,7-hexachloro-bicyclo-(2.2.1)-5-heptene-2,3-dicarboxylic acid or anhydride. Such compounds are sometimes referred to as chlorendic acid or anhydride and may be so referred to hereinafter in the present specification.

The polymer compositions of the present invention may be prepared by conventional mass or solution polymerization techniques.

Polyester systems containing brominated additives to improve flame retardancy are also known in the art, for example, U. S. Patents Nos. 3,480,600; 3,755,498; 3,763,644; 4,032,509; and 4,051,311. However, brominated additives have not been eminently successfully used in polyester resin systems or compositions because of their adverse effect on weathering, light stability, strength and heat distortion properties of the final resin product, particularly polyester resin products such as panels used in the construction industry. The present resin systems and

- 3 -

compositions contain a reactive adduct of hexachlorocyclopentadiene with a compatible brominated additive and do not suffer the adverse effects frequently attributed to the addition of brominated compounds.

## SUMMARY OF THE INVENTION

The flame-retardant polymer or polymerized compositions of the present invention contain the reaction product, an adduct of hexahalocyclopentadiene with maleic acid or anhydride, a polyhydric alcohol component, a polycarboxylic acid or acid anhydride component containing aliphatic carbon-to-carbon unsaturation, a maleic or halomaleic, and a styrene-type component. The flame retardancy of the systems and resultant polymerized compositions is substantially bolstered by the inclusion of finely-divided antimony oxide, zinc borate, or mixtures thereof and a brominated organic compound soluble in styrene.

## DETAILED DESCRIPTION OF THE INVENTION AND PREFERRED EMBODIMENTS

The various components of the present polyester polymer systems and compositions are described separately below.

The reactive adducts of hexahalocyclopentadiene useful in the present invention, particularly the maleic acid or anhydride adducts, have been described in the foregoing. The preferred adducts are 1,4,5,6,7,7-hexa-chlorobicyclo-(2.2.1)-5-heptene-2,3-dicarboxylic acid or anhydride. The adducts are generally present in the polyester in amounts between about 40 and about 65 percent by weight.

The polyhydric alcohol component can be aliphatic or alicyclic and can have aliphatic carbon-to-carbon unsaturation, and may have up to 40 carbon atoms. Preferably, the alcohol component contains between about 2 and about 12 carbon atoms. Examples of suitable alcohols are ethylene glycol, diethylene glycol, triethylene glycol, propylene glycol, and includes reactive ethers, such as allyl glyceryl ether, or mixtures of alcohols or alcohols and ethers. The alcohol component is generally present in the polyester in amounts between about 10 and about 30 percent by weight.

The polycarboxylic acid component includes acid anhydrides and may be aliphatic, alicyclic or aromatic providing there is at least some aliphatic carbon-to-carbon unsaturation. The acid component may have up to 40 carbon atoms. Preferably, the acid component contains between about 3 and about 12 carbon atoms. Examples of suitable polycarboxylic acids are maleic, fumaric, itaconic, sebacic or mixtures thereof. The acid component is generally present in the polyester in amounts between about 10 and about 60 percent by weight.

The maleic or fumeric acid or anhydride component is utilized to render the polyester copolymerizable and, if not added as part of the polycarboxylic acid component, is suitably added separately. Generally, the maleic acid component is present in amounts between about 10 and about 40 percent by weight of the polyester.

The brominated organic materials must be soluble in styrene and stable to heat and light. Typical bromine containing compounds useful in this invention include dibromoneopentyl acrylate, tribromoneopentyl acrylate, tribromophenyl acrylate, tribromophenyl methacrylate, dibromophenyl methacrylate, tribromoneopentyl methacrylate, octabromodiphenylene oxide and decabromodiphenylene oxide. Preferred compounds are selected from dibromoneopentyl glycol, dibromoneopentyl glycol fumarate, pentabromoethyl benzene, dibromopropyl acrylate, tris-2,3-dibromopropyl phosphate, or mixtures thereof. Generally, such materials are present in the system in amounts between about 2 and about 25 percent by weight and, more preferably, from about 5 to about 15 percent by weight, of the system. Usually, less than about 2 percent does not significantly improve the flame retardancy of the final polymerized composition, and amounts greater than about 25 percent by weight do not produce a polymerized product having the structural strength and heat distortion properties required or desired in many applications, particularly in the production of laminated panels used for construction purposes.

The finely-divided metallic component is selected from antimony oxide or zinc borate, or mixtures thereof, preferably in a colloidal size.

Generally, such component is present in amounts between about 0.5 and 5.0 percent and, more preferably, between about 1.0 and about 3.0 percent by weight of the system. Less than about 0.5 percent by weight usually does not significantly improve the flame retardancy of the final polymerized compound and do not synergistically improve the flame retardancy imparted by the added brominated organic material. In amounts over about 5.0 percent by weight the metallic component does not produce a final product which exhibits physical strength and the clarity properties desired for use in the construction industry. Amounts within the range of from about 1.0 and about 3.0 percent by weight enhance the flame retardant properties contributed by the brominated organic material in a synergistic manner.

The styrene-type component is a monomer and suitably includes styrene, alpha-methylstyrene and halogenated styrenes, such as o-, p- and m-chlorostyrenes. The styrene-type component is generally included in amounts between about 25 and about 40 percent and, more preferably, between about 30 and about 35 percent, by weight of the total polyester system.

The following examples are presented to illustrate the invention and are not to be interpreted as limiting the invention to the specific embodiments of the examples. Unless otherwise indicated, all parts in the examples are parts by weight, and all temperatures are in degrees Centigrade.

EXAMPLE I

Fifty-two and eight-tenths parts of ethylene glycol and ninety party of diethylene glycol were charged into an esterification vessel and blanketed with an inert atmosphere of nitrogen. With agitation the mixture was heated to a temperature between about $80^o$ and $100^o$. 394.7 parts of 1,4,5,6,7,7-hexachlorobicyclo-(2.2.1)-5-heptene-2,3-dicarboxylic anhydride was then blended with the glycols. Seventy and eight-tenths parts of maleic anhydride was then added with continuous mixing and the temperature raised to $160^o$ to $170^o$. Water of esterification was removed and the acid number monitored. When an acid number of about 55 was reached, 3.6 parts of tetrahydrofurfuryl alcohol was added. Upon reaching an acid number of about 45, the mixture was allowed to cool and cast into pans under an inert atmosphere. The product was a faintly colored transparent brittle material melting at a temperature above room temperature and below 100°C.

EXAMPLE II

One hundred parts of the cast product of Example I was crushed and added, with agitation, to 30 parts of styrene containing 0.03 parts of hydroquinone and the mixture maintained under an inert atmosphere. A complete dissolving took a period of about 24 hours. The resultant product was a clear, substantially colorless solution having a viscosity of about 30 poises at 25°C on a Garbner bubble viscometer.

EXAMPLE III

One hundred parts of the solution of Example II was mixed with sufficient dibromoneopentyl glycol fumarate to provide a bromine level of 5 parts/hundred of resin, and one and one-half parts of colloidal antimony oxide. Nine and three-tenths parts of trichloroethylphosphate and two parts of methylethyl ketone peroxide as an initiator were added with continuous mixing. Thirty parts of chopped strand glass mat was impregnated with the above mixture. The resulting product was then cast as a flat panel about 1 mm thick and was set into a polymerized composition by raising the temperature to about 80°C and aging for a period of twelve hours.

EXAMPLE IV

The panel of Example III was tested to determine flame retardancy by the oxygen index test. The oxygen index test is described in Modern Plastics, March, 1970, p. 124 and may broadly be described as the minimal volume percent of oxygen in a slowly rising oxygen/nitrogen atmosphere that will sustain a candle-like burning of the resin panel when the panel is ignited at the top. The panel tested was found to have an oxygen index of 33.0 and a tensile strength of 14,200 psi.

EXAMPLES

| Parts | IV | V | VI | VII | VIII | IX | X |
|---|---|---|---|---|---|---|---|
| Resin | 100 | 100 | 100 | 100 | 100 | 100 | 100 |
| $Sb_2O_3$ | 1.5 | 1.5 | 3.0 | 3.0 | 3.0 | 0 | 0 |
| Dibromoneopentyl glycol (Br phr) | 5.0 | 10.0 | 5.0 | 10.0 | 0 | 5 | 0 |
| $O_2$ Index | 33 | 34 | 34 | 37 | 33 | 32 | 30 |
| Tensile Strength psi | 14,200 | 13,400 | 15,900 | 11,900 | 11,800 | 10,100 | 14,700 |
| Transparency | | | | | | | |
| Initial | 55 | 52 | 46 | 40 | 47 | 70 | 72 |
| After 500 hours | 41 | 38 | 30 | 28 | 33 | 52 | 56 |
| Hunter "L" | | | | | | | |
| Initial | 91.8 | 92.4 | 89.9 | 89.2 | 90.3 | 95.6 | 95.7 |
| After 500 hours | 81.7 | 82.5 | 74.7 | 73.6 | 76.2 | 87.6 | 93.0 |
| Hunter "a" | | | | | | | |
| Initial | -2.2 | -2.1 | -2.2 | -2.2 | -2.2 | -2.1 | -1.5 |
| After 500 hours | -4.7 | -3.7 | -2.7 | -2.2 | -3.2 | -5.1 | -4.0 |
| Hunter "b" | | | | | | | |
| Initial | 8.9 | 8.5 | 9.9 | 10.5 | 10.1 | 7.7 | 4.7 |
| After 500 hours | 20.7 | 21.3 | 21.7 | 22.9 | 21.0 | 22.5 | 18.1 |

CLAIMS

1. A curable system for use in preparing flame-retardant polyester compositions and comprising a mixture of

a) a reactive adduct of a hexahalocyclopentadiene and maleic acid or anhydride;

b) a polyhydric alcohol component;

c) a polycarboxylic acid or anhydride component containing carbon-to-carbon unsaturation;

d) a finely-divided metallic component which is antimony oxide and/or zinc borate;

e) a brominated organic component; and

f) a styrene-type monomer,

components a), b) and c) optionally being present in the form of an unsaturated polyester reaction product.

2. A system according to claim 1 wherein the adduct a) is 1,4,5,6,7,7-hexachlorobicyclo-(2.2.1)-5-heptene-2,3-dicarboxylic acid.

3. A system according to claim 1 wherein the adduct a) is 1,4,5,6,7,7-hexachlorobicyclo-(2.2.1)-5-heptene-2,3-dicarboxylic anhydride.

4. A system according to claim 1, 2 or 3 wherein the polyhydric alcohol component b) is at least one of ethylene glycol, diethylene glycol, triethylene glycol, propylene glycol and allyl glyceryl ether.

5. A system according to any one of claims 1 to 4 wherein the polycarboxylic acid or anhydride component c) is at least one of maleic, fumaric, itaconic and sebacic acid or anhydride.

6. A system according to any one of claims 1 to 5 wherein the brominated organic component e) is at least one of dibromoneopentyl glycol, dibromoneopentyl glycol fumarate, pentabromoethyl benzene, dibromopropyl acrylate and tris-2,3-dibromopropyl phosphate.

7.      A system according to any one of claims 1 to 6 wherein the styrene-type monomer f) is at least one of styrene, alpha-methyl styrene and halogenated styrenes.

8.      A flame-retardant polyester composition obtained by curing a system as claimed in any one of the preceding claims.

## European Patent Office

## EUROPEAN SEARCH REPORT

| | DOCUMENTS CONSIDERED TO BE RELEVANT | | CLASSIFICATION OF THE APPLICATION (Int. Cl. ³) |
|---|---|---|---|
| **Category** | **Citation of document with indication, where appropriate, of relevant passages** | **Relevant to claim** | |
| Y | DE - A1 - 2 531 816 (HOOKER CHEMICALS & PLASTICS CORP.)<br>* claim 1, examples 16C, 84C, page 9, line 27 *<br>& US - A - 4 152 368<br>-- | 1 | C 08 G 63/68<br>C 08 K 3/20<br>C 08 K 3/38<br>C 08 K 5/02<br>C 08 K 5/03<br>C 08 K 5/05<br>C 08 K 5/52<br>C 08 L 67/06<br>C 08 F 299/04 |
| Y | KUNSTSTOFF-JOURNAL, No. 1 to 2, 1976<br>München<br>H.E. STEPNICZKA "Flammschutzmittel"<br>pages 12, 14<br>* page 14, column 1 *<br>-- | 1,6 | |
| Y | Patent Abstracts of Japan<br>Vol. 4, No. 69, 22 May 1980<br>page 13C11<br>& JP - A - 55 - 34209<br>-- | 1 | TECHNICAL FIELDS SEARCHED (Int.Cl. ³)<br><br>C 08 F 299/04<br>C 08 G 63/52<br>C 08 G 63/54<br>C 08 G 63/68<br>C 08 K 3/00<br>C 08 K 3/20<br>C 08 K 3/38<br>C 08 K 5/00<br>C 08 K 5/02<br>C 08 K 5/03<br>C 08 K 5/05<br>C 08 K 5/52<br>C 08 L 67/00<br>C 08 L 67/06 |
| D,Y | US - A - 2 779 700 (P. ROBITSCHEK et al.)<br>* examples 1 to 3 *<br>-- | 1 | |
| A | US - A - 3 992 480 (E. DORFMAN et al.)<br>* examples 1, 5; tables 1, 5 *<br>-- | 1 | |
| D,A | US - A - 4 032 509 (Y.C. LEE)<br>-- | | |
| D,A | US - A - 4 051 311 (Y.C. LEE)<br>---- | | |

| | | | |
|---|---|---|---|
| X | The present search report has been drawn up for all claims | | |
| **Place of search**<br>Berlin | **Date of completion of the search**<br>18-03-1982 | **Examiner**<br>WIBMER | |

EPO Form 1503.1 06.78